# EUROPEAN PATENT APPLICATION

(11) **EP 1 060 674 A2**
(43) Date of publication of application: **20.12.2000**
(21) Application number: 00305119.0
(22) Date of filing: 16.06.2000
(51) Int. Cl.: A23L 1/236

(54) **Low-calorie sugar emulant**

(30) Priority: 18.06.1999 GB 9914241
(71) Applicant: Forum Products Limited, Redhill, Surrey RH1 6YS (GB)
(72) Inventor: Conn, Helen, Bletchingley, Surrey RH1 4QZ (GB)
(74) Representative: Woodcraft, David Charles

(57) **Abstract**

A composition for emulating the appearance and taste of sugar and comprising an intense sweetener and at least one low-caloric bulking agent. The composition comprises particles which are in single phase melt-spun form and preferably comprises at least one polydextrose and at least one polyhydric alcohol.

## Description

This invention relates to low-calorie sugar emulants, and to methods for making the same.

Low-calorie sugar emulants are extensively used in the food production and catering industries, introduced into foodstuffs to provide a sweet taste without making the food energy-rich. Such low calorie sugar emulants are made widespread use of in the 'diet' or 'light' foods aimed at slimmers and others on calorie-controlled diets.

Sugar emulants are also used in food products made for diabetics. Acesulfame K which is not metabolised, or Sorbitol and Xylitol, which are metabolised without involving insulin are commonly utilised in such compositions.

By low-calorie sugar emulant it is meant a composition having a sweetness similar to that of sucrose, but which yields only a fraction of the energy to a body. Sucrose delivers up to 16.5 Jg⁻¹ (3.94 cal/g⁻¹) in a healthy human adult.

Known low-calorie sugar emulants include that consisting of sodium saccharin and sold under the trade name "Hermesetas" and "Canderel" made by Monsanto which consists of maltodextrin and aspartame. The latter composition is produced by a spray drying technique as disclosed in European Patent No. 094088 to G. D. Searle and Company. This technique involves forming a solution of aspartame and maltodextrin, pressuring the solution before injecting carbon dioxide and spray drying the solution. However, spray drying bulking agents such as larger oligosaccharides or polysaccharides is a difficult and costly operation.

European Patent No. 0411991 to Searle de France SA also discloses an aspartame based sugar emulant. The sugar emulant is made by freeze-drying (lyophilizing) a solution of up to 2% aspartame, up to 5% dextrose or hydrogenated dextrose and up to 40% hydrogenate isomaltose in water. The solution is freeze-dried in moulds to give a product like a lump of sugar, designed for use in sweetening beverages as the loose powder form is not sufficiently resistant to handling.

Further drawbacks associated with presently available low-calorie sugar emulants include that such emulants generally ape only the sweetness of sugar (sucrose) and not its other properties, such as its bulk density, its free flowing properties and its 'mouthfeel'. The present invention seeks to overcome these drawbacks and provide a low-calorie composition which may be used as a sugar emulant for commercial food manufacture or for table-top use.

According to one aspect of the invention there is provided a low-calorie solid, pourable composition for emulating sugar, the composition comprising an intense sweetener and at least one low-calorie bulking agent, wherein particles of the composition are of a single-phase melt-spun form.

In a preferred embodiment of the invention the low calorie bulking agent is a polysaccharide.

In a more preferred embodiment of the invention, the low calorie bulking agent is a polydextrose.

In a further preferred embodiment of the invention the intense sweetener is selected from the group consisting of: Acesulfame K, Aspartame, DL-Aminomaonyl-D-alanine isopropyl ester (RTI-001), sodium cyclamate, sodium saccharin, sweet glycosides, 1',4,6'-trichlorogalactosucrose and mixtures thereof.

Other embodiments of the invention may include further bulking agents which may or may not have a sweetening effect. Polyhydric alcohols are considered suitable further bulking agents.

According to another aspect of the invention there is provided a method for producing a low calorie sugar emulant, the method comprising:
providing as a feedstock a mixture comprising an intense sweetening agent and at least one low-calorie bulking agent,
introducing the feedstock to the spinning head of a spinning machine, and melt-spinning the feedstock.

Melt-spinning is the process used to make candy floss. A solid feedstock (i.e. sugar) is introduced to the spinning head of a spinning machine where it is thrown radially outwards onto heating elements causing it to undergo flash flow transition as it passes between the heating elements. The molten sugar is spun out through apertures in the wall of the spinning head and solidifies. Apparatus for melt spinning a sugar feedstock is disclosed in US Patent No. 4,872,821 and 5447423, amongst others.

Melt-spinning the low-calorie bulking agent, such as polydextrose (optionally together with a second low-calorie bulking agent, such as polyhydric alcohol) in the presence of a minor amount of an intense sweetener, results in a glass in which the intense sweetener is dispersed. Depending on the parameters of the melt-spinning, especially temperature, aperture sizes in the walls of the spinning head and rotational speed, the product may comprise filaments, flakes or particles or agglomeration of particles. The initial product may be subjected to further modifications, e.g. by grinding or agglomeration to produce the desired particle size.

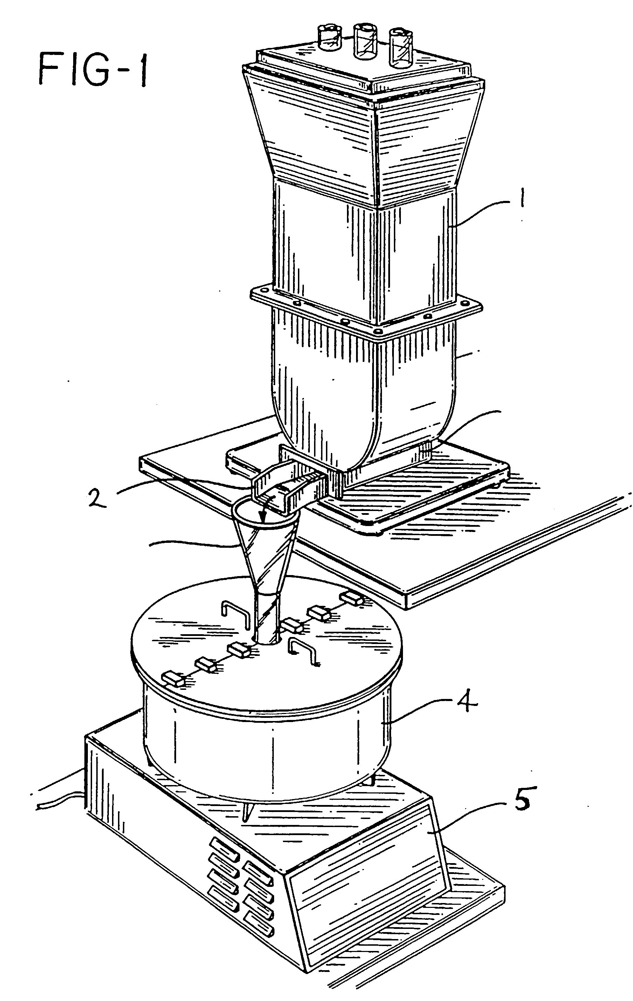

The invention will now be further described with reference to the accompanying drawings, in which:-
Figure 1 shows an assembly for melt-spinning low-calorie sugar emulants; and

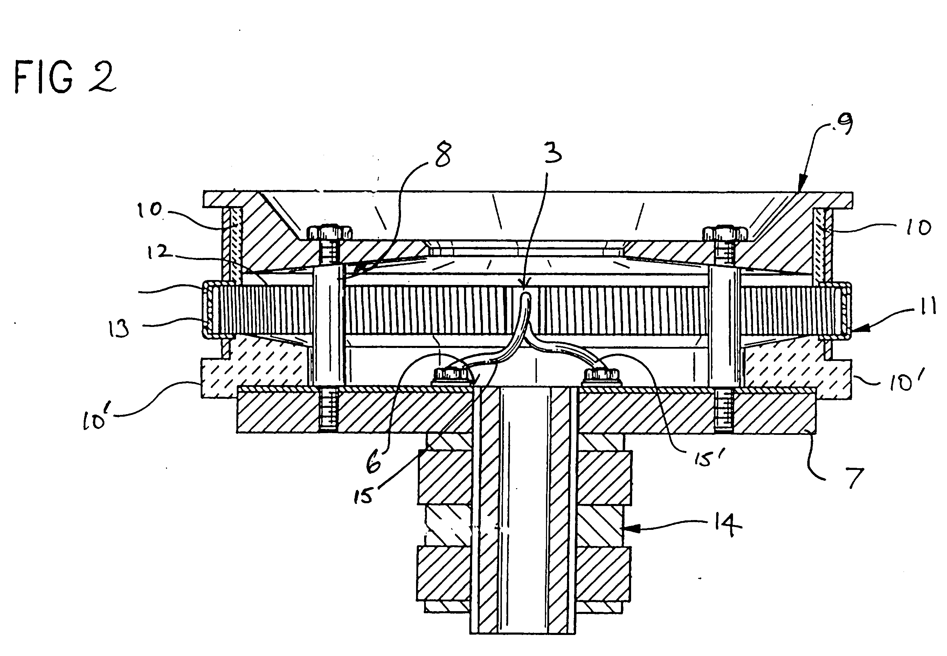

Figure 2 shows, in cross-section, a spinning head used in the apparatus of Figure 1.

A low-calorie sugar emulant comprising an intense sweetener and at least one low-calorie bulking agent is formed by melt-spinning a solid feedstock.

The intense sweetener is a compound having a sweetening potency one order of magnitude or more greater than that of sucrose. The racemic mixture of RTI-001 and sodium cyclamate, produce by sulphonation of cyclohexylamine have sweetening potencies of 58 and 40 respectively (where sucrose is assigned the potency of 1.0). Natural sweeteners such as the diterpenoid glycosides Stevioside and Rebaudioside A have sweetening potencies of between 250 and 400. 1',4,6'Trichlorogalactoscurose has a sweetening potency as high as 2000. Aspartame, Acesultame K and sodium saccharin, of course, have well known properties and are readily available. For this reason, they are the preferred sweeteners for use in the invention.

Aspartame is considered the most desirable intense sweetener for use in the invention due to its taste profile being nearest to that of sucrose. The preceding examples are not, however, to be construed as limiting upon the invention.

At least one low-calorie bulking agent is to be included with the sweetener in the feedstock. The feedstock may be mechanically or otherwise mixed.

The low-calorie bulking agent is a polysaccharide or large oligosaccharide. Although polydextrose is the preferred bulking agent, others such as starches, modified starches, celluloses such as microcrystalline cellulose (E460), glycogen or dextrins, particularly maltodextrin, may be used. Other known low-calorie bulking agents, particularly those not metabolised by or in the human body, will readily suggest themselves to those skilled in the art. The low-calorie bulking agent may also be a mixture of the aforementioned substances.

The composition of the invention may be enhanced by the addition of a further low-calorie bulking agent. This further low-calorie bulking agent preferably, but not essentially, also has a slight sweetening effect. In the cases where Aspartame, Acesultame K or sodium saccharin are employed as the intense sweetener, it is desirable to add a bulking agent which allows the composition to more closely mimic the taste profile of sucrose, masking the bitter metallic taste of the sweeteners.

Polyhydric alcohols, for example, pentahydric or hexahydric alcohols such as xylitol, mannitol, higher alcohols such as lactitol, or mixtures thereof are favoured as further bulking agents. Hydrogenated polyhydric alcohols may also be included as the further low-calorie bulking agent. Those skilled in the art will have little difficulty in selecting other suitable further bulking agents.

The composition preferably comprises a polydextrose and a polyhydric alcohol, together with a minor amount, e.g. less than 3% by weight, of an intense sweetener. Preferred compositions comprise polydextrose and a polyhydric alcohol in the weight ratio of from 20:80 to 80:20, especially 40:60 to 60:40, together with up to 3% by weight of an intense sweetener.

A presently preferred composition of the invention comprises Aspartame, polydextrose and lactitol in the weight ratios of from 20:80 to 80:20 and aspartame in an amount of 0.1 to 2%, especially 0.3 to 1% by weight of the other components.

The presently preferred composition of the invention comprises about 0.5 parts Aspartame, about 49.5 parts polydextrose and about 50 parts lactitol.

Particles of the composition are of a single-phase melt-spun form.

A method for producing a low-calorie sugar emulant is hereinbelow more fully described.

A hopper (1) is charged with feedstock mixture. In some embodiments of the invention the hopper is equipped with a stirrer, but more usually the feedstock is added 'ready-mixed'.

The feedstock is delivered from the hopper via an inclined channel (2) or other suitable device, such as an Archimedes-type screw, to a spinning head (3) located in a basin (4). The basin and spinning head are mounted on a plinth (5) which houses the controllable variable speed motor (not shown) that drives the spinning head.

The spinning head (3) may be any suitable spinning head. However, in some embodiments of the invention the spinning head (3) having a lower internal surface (6) defined by a base-piece (7), an upper internal surface (8) defined by a cap-piece (9), and upper and lower annular insulators (10,10'), partially defining a sidewall; is provided with a flash-flow array (11) comprising an annular coiled heating element (12) disposed within a penetrable band (13). The annular coiled heating element is made of metal and fashioned such that there is a spacing between each turn of the coil. This spacing is large enough to allow the feedstock to pass therethrough during melt-spinning, but small enough to ensure the material so passing is heated sufficiently to undergo flash-flow. Generally, spacings of between 0.2 to 2.0 mm, preferably 0.5 to 0.75 mm, are employed. The heating element is connected to a power source, e.g. mains electricity, by insulated leads (15,15') in a manner readily determinable by those skilled in the art to provide the heating effect.

The penetrable band is generally cast as a solid piece and then provided with local discontinuities such as slots or holes to become penetrable. The penetrable band lies closely adjacent the heating element and is conveniently made from metal or plastics material such as polyimide film or polytetrafluoroethylene, although other heat-resistant materials may usefully be employed. Preferably, the material is nonconductive.

The spinner head is further provided with a shaft (14), arranged concentrically with and projecting downwardly from the base-piece (7), which couples to the motor (not shown) to provide the centrifugal force that drives feedstock material against the heating element.

The centrifugal force throws feedstock particles against the element where they are heated sufficiently to undergo flash-flow, that is to deform the feedstock through melting and flowing through the apertures of the flash-flow array under force. The molten feedstock is ejected as discrete particles, e.g. spicules, flakes or floss of the new low-calorie sugar emulant. Simple experiments will enable the skilled man to select the correct heating element temperature and spinning speed to yield the fused feedstock material with the desired morphology.

Although the invention has been described with reference to preferred embodiments, it is apparent that the compositions and methods of the invention are not so limited. Such will be obvious to those skilled in the art.

## Claims

1. A low-calorie solid, pourable composition for emulating sugar, the composition comprising:
an intense sweetener and at least one low-calorie bulking agent,
wherein particles of the composition are of a single phase melt-spun form.

2. A composition according to claim 1 wherein the at least one low-calorie bulking agent is an oligosaccharide or polysaccharide.

3. A composition according to claim 1 or claim 2 wherein the at least one low-calorie bulking agent is selected from the group consisting of: polydextroses, dextrins, celluloses, starches, modified starches or mixtures thereof.

4. A composition according to claim 1 or claim 2 wherein the at least one low-calorie bulking agent is not metabolised within the human body.

5. A composition according to claims 1 to 4 wherein the intense sweetener is selected from the group consisting of: Acesulfame K, Aspartame, RTI-001, sodium cyclamate, sodium saccharin, 1',4,6'-trichlorogalactosucrose, sweet glycosides or mixtures thereof.

6. A composition according to any one of the preceding claims wherein the at least one low-calorie bulking agent comprises two low-calorie bulking agents.

7. A composition according to claim 6 wherein at least one of the low-calorie bulking agents is a polyhydric alcohol or a mixture of polyhydric alcohols.

8. A low-calorie composition for emulating sugar, the composition comprising polydextrose and a polyhydric alcohol in the weight ratio of 20:80 to 80:20 and an intense sweetener comprising aspartame.

9. A composition as claimed in claim 8 comprising polydextrose and a polyhydric alcohol in the weight ratio of 40:60 to 60:40, together with an intense sweetener.

10. A composition as claimed in claim 8 or 9 wherein the polydextrose and the polyhydric alcohol are present in substantially equal amounts by weight.

11. A composition as claimed in any one of claims 8 to 10 wherein the polyhydric alcohol comprises lactitol.

12. A composition as claimed in any one of claims 8 to 11 wherein the intense sweetener is present in an amount of from 0.3 to 2% by weight.

13. A composition according to any one of claims 8 to 12 comprising about 49.5 parts polydextrose, about 50 parts lactitol and about 0.5 parts by weight aspartame.

14. A composition for emulating sugar substantially as hereinbefore described.

15. A method for producing a low-calorie sugar emulant, the method comprising:
providing as a feedstock a mixture comprising an intense sweetener and at least one low-calorie bulking agent, introducing the mixed feedstock into a spinning machine having a spinning head with a flash flow array and a central axis of rotation, and melt spinning the feedstock.

16. A method according to claim 15 wherein the melt spinning produces particles of low-calorie sugar emulant in the form of granules, spicules, flakes or floss.

17. A method according to claim 15 further comprising the step of forming the melt spun product into powder, granules or lumps.

18. A method according to claim 17 wherein the further step comprises agglomerating and/or grinding the melt-spun product.
